(19) **Europäisches Patentamt**
**European Patent Office**
**Office européen des brevets**

(11) **EP 3 679 618 B1**

(12) **EUROPÄISCHE PATENTSCHRIFT**

(45) Veröffentlichungstag und Bekanntmachung des Hinweises auf die Patenterteilung:
**29.12.2021  Patentblatt 2021/52**

(51) Int Cl.:
***H01M 8/0444*** (2016.01)

(21) Anmeldenummer: **18765006.4**

(86) Internationale Anmeldenummer:
**PCT/EP2018/071585**

(22) Anmeldetag: **09.08.2018**

(87) Internationale Veröffentlichungsnummer:
**WO 2019/048173 (14.03.2019 Gazette 2019/11)**

(54) **VERFAHREN ZUM BETREIBEN EINER BRENNSTOFFZELLENVORRICHTUNG**

METHOD OF OPERATING A FUEL CELL DEVICE

PROCÉDÉ D'OPÉRATION D'UNE PILE À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2017  DE 102017215551**

(43) Veröffentlichungstag der Anmeldung:
**15.07.2020  Patentblatt 2020/29**

(73) Patentinhaber: **Robert Bosch GmbH**
**70442 Stuttgart (DE)**

(72) Erfinder:
• **HERING, Martin**
**71067 Sindelfingen (DE)**
• **WAHL, Stefanie**
**71691 Freiberg Am Neckar (DE)**

(56) Entgegenhaltungen:
**EP-A1- 2 866 288       WO-A1-02/40992**
**WO-A1-2012/069693**

**Beschreibung**

Die vorliegende Erfindung betrifft ein Verfahren zum Betreiben einer

Brennstoffzellenvorrichtung, wobei die Brennstoffzellenvorrichtung in Abhängigkeit einer Qualitätskenngröße eines verwendeten Brennstoffs betrieben wird.

Stand der Technik

Die DE 10 2013 221 618 A1 offenbart ein Verfahren zum Betreiben einer Brennstoffzellenvorrichtung, mit zumindest einer Brennstoffzelleneinheit, wobei eine Reformereinheit und/oder die Brennstoffzelleneinheit in Abhängigkeit von einer erfassten Qualitätskenngröße eines verwendeten Erdgases betrieben wird.

WO 2012 069693 offenbart ein Verfahren und eine Vorrichtung zum Betreiben einer Brennstoffzelle bei der die Zusammensetzung eines Brennstoffs aus der teilweisen Analyse der Zusammensetzung des verwendeten Brennstoffs bestimmt wird.

Offenbarung der Erfindung

Die Vorliegende Erfindung hat demgegenüber den Vorteil, dass die Anzahl potentiell freisetzbarer Elektronen pro Molekül als Qualitätskenngröße aus einer teilweisen Analyse der Bestandteile des verwendeten Brennstoffs bestimmt wird. Dadurch kann eine effiziente Regelung der Brennstoffzellenvorrichtung erfolgen, ohne dass eine volle Analyse des verwendeten Brennstoffs erfolgt.

Durch die in den Unteransprüchen aufgeführten Merkmale sind vorteilhafte Weiterbildungen der Erfindung nach dem Hauptanspruch möglich. So ist es bevorzugt, dass die Brennstoffzellenvorrichtung zumindest eine Reformereinheit und/oder zumindest eine Brennstoffzelleneinheit aufweist, wobei die zumindest eine Reformereinheit und/oder die zumindest eine Brennstoffzelleneinheit in Abhängigkeit der Qualitätskenngröße des verwendeten Brennstoffs betrieben werden, wodurch die Regelung gezielt erfolgen kann.

Gemäss der Erfindung entspricht die Qualitätskenngröße einer Anzahl potentiell freisetzbarer Elektronen pro Molekül des verwendeten Brennstoffs, insbesondere einer Elektronenkonfiguration, wodurch eine aussagekräftige Qualitätskenngröße für die Regelung der Brennstoffzellenvorrichtung zur Verfügung gestellt werden kann.

In vorteilhafter Weise werden zur Regelung der Brennstoffzellenvorrichtung Sollwerte vorgegeben, wobei ein erster Sollwert einem Verhältnis zwischen Sauerstoff und Kohlenstoff entspricht, ein zweiter Sollwert einem Brennstoffnutzungsgrad entspricht und/oder ein dritter Sollwert einem elektrischen Stromwert entspricht, wodurch eine besonders präzise und effektive Regelung ermöglicht wird.

In einer vorteilhaften Ausführung weist die Brennstoffzellenvorrichtung eine Abgasrückführung auf, wobei eine Abgasrückführungsrate in Abhängigkeit der Qualitätskenngröße geregelt wird und insbesondere in Abhängigkeit des ersten, zweiten und/oder dritten Sollwerts, wodurch eine Vermischung von verwendetem Brennstoff und rückgeführtem Abgas gezielt für eine effektive Regelung eingestellt werden kann.

In einer weiteren Vorteilhaften Ausführung weist die Brennstoffzellenvorrichtung eine Wasserzuführung auf, wobei eine Wasserzuführungsrate in Abhängigkeit der Qualitätskenngröße geregelt wird, und insbesondere in Abhängigkeit des ersten, zweiten und/oder dritten Sollwerts, wodurch eine Vermischung von verwendetem Brennstoff und zugeführtem Wasser, insbesondere Wasserdampf, gezielt für eine effektive Regelung eingestellt werden kann.

Die Erfindung betrifft auch eine Brennstoffzellenvorrichtung, welche mit einem Verfahren nach der vorhergehenden Beschreibung betrieben wird.

Zeichnungen

In den Zeichnungen sind Ausführungsbeispiele der Erfindung schematisch dargestellt und in der nachfolgenden Beschreibung näher erläutert. Es zeigen

Fig. 1    eine schematische Darstellung eines Ausführungsbeispiels einer Brennstoffzellenvorrichtung,

Fig. 2    eine schematische Darstellung eines weiteren Ausführungsbeispiels einer Brennstoffzellenvorrichtung.

Beschreibung der Ausführungsbeispiele

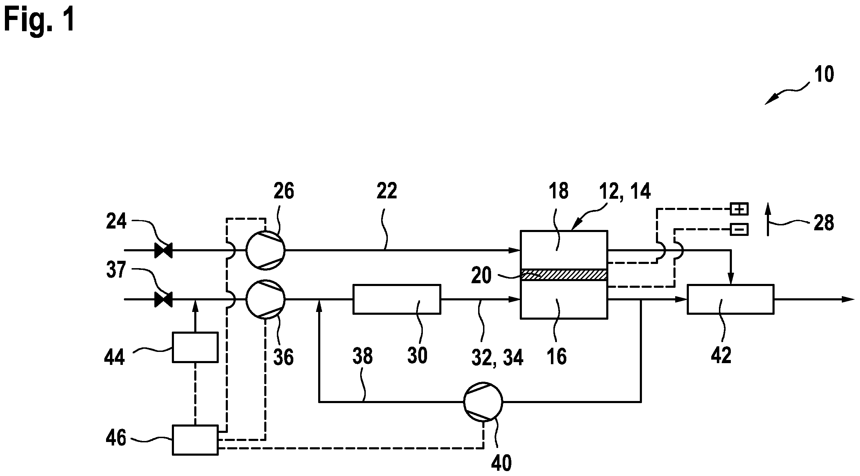

In Fig. 1 ist eine schematische Darstellung eines Ausführungsbeispiels einer Brennstoffzellenvorrichtung 10 gezeigt. Die Brennstoffzellenvorrichtung 10 weist eine Brennstoffzelleneinheit 12 auf. Die Brennstoffzelleneinheit 12 weist in dem gezeigten Ausführungsbeispiel eine Brennstoffzelle 14 zur Bereitstellung von elektrischer Energie auf.

Alternativ ist es jedoch auch denkbar, dass die Brennstoffzelleneinheit 12 eine Vielzahl an Brennstoffzellen 14 aufweist, die beispielsweise einen Brennstoffzellenstack bilden. Ebenso wäre es auch denkbar, dass die Brennstoffzelleneinheit 12 eine Vielzahl von Brennstoffzellenstacks aufweist.

In dem gezeigten Fall handelt es sich bei der Brennstoffzelle um eine Feststoxidbrennstoffzelle (engl. Solid Oxid Fuel Cell, SOFC). Alternativ wäre es aber auch denkbar eine andere Zellentechnologie, wie beispielsweise eine Polymerelektrolytbrennstoffzelle (engl. Polymer Electrolyte Fuel Cell, PEFC), eine Schmelzkarbonatbrennstoffzelle (engl. Molten Carbonate Fuel Cell, MCFC) und/oder eine Phosphorsäurebrennstoffzelle (engl. Phosphoric Acid Fuel Cell, PAFC), zu verwenden.

Die Brennstoffzelle weist eine Anode 16 und eine Kathode 18 auf. Zwischen der Anode 16 und der Kathode 18 ist ein Elektrolyt 20 angeordnet. Die Anode 16 ist von der Kathode 18 durch den Elektrolyten 20 getrennt.

Der Kathode 18 der Brennstoffzelleneinheit 12 ist über eine Zuleitung 22 ein Oxidationsmittel, insbesondere Luft oder Sauerstoff, zuführbar. Das Oxidationsmittel wird über ein Ventil 24 eingeleitet und mittels eines Verdichters 26 komprimiert.

Zur Bereitstellung von elektrischer Energie bzw. Erzeugung einer elektrischen Spannung 28 ist es ferner notwendig, der Brennstoffzelleneinheit 12 an der Anode 16 ein brennstoffhaltiges Synthesegas, im gezeigten Fall ein wasserstoffhaltiges Synthesegas zuzuführen. Zur Erzeugung eines brennstoffhaltigen Synthesegases ist der Brennstoffzelleneinheit 12 eine Reformereinheit 30 vorgeschaltet. Die Reformereinheit 30 ist über eine Fluidverbindung 32 mit der Brennstoffzelleneinheit 12, bzw. mit der Anode 16 der Brennstoffzelle 14, verbunden. Die Fluidverbindung 32 umfasst dazu eine Rohrleitung 34.

Zur Erzeugung des brenngashaltigen Synthesegases wird der Reformereinheit 30 ein Gemisch aus Erdgas und einem weiteren Reaktanten, insbesondere Sauerstoff und/oder Wasserdampf zugeführt, welches durch eine Reformierung, hier durch eine Dampfreformierung, in das brenngashaltige Synthesegas überführt wird. Das Erdgas wird durch einen Verdichter 36 komprimiert und über das Ventil 37 der Brennstoffzellenvorrichtung 10 zugeführt. Stromabwärts des Verdichters 36 wird dem Erdgas als weiterer Reaktant Wasser, insbesondere in Form von Wasserdampf, beigemischt.

In dem in Fig. 1 gezeigten Ausführungsbeispiel, weist die Brennstoffzellenvorrichtung eine Abgasrückführung 38 auf durch die dem Erdgas als weiterer Reaktant Wasser beigemischt wird. So ist die Abgasrückführung 38 dazu vorgesehen, Abgas, im gezeigten Fall Anodenabgas, zumindest teilweise zur Vermischung mit dem Erdgas und dem weiteren Reaktanten, im gezeigten Fall Wasser, bzw. Wasserdampf, zurückzuführen. So handelt es sich bei der Abgasrückführung 38 um eine Anodenabgasrückführung. Dazu weist die Abgasrückführung 38 einen Verdichter 40 auf, der zur Rückführung von Abgas zur Reformereinheit 30 vorgesehen ist. Dadurch kann Wasserdampf aus einem Reaktionsvorgang in der Brennstoffzelleneinheit 12 zur Reformierung von Erdgas verwendet werden. Während der Reformierung werden langkettige Alkane komplett reformiert. Methan wird hingegen zu einem Teil in der Reformereinheit 30 und zu einem Teil in der Brennstoffzelleneinheit 12 reformiert. Ferner kann ungenutztes Synthesegas in die Brennstoffzelle zurückgeführt werden, was einen Brennstoffnutzungsgrad der Brennstoffzellenvorrichtung 10 erhöht.

Die verschiedenen Alkane des Erdgases werden zusammen mit dem Wasserdampf in die Reformereinheit 30 geleitet und dort reformiert. Eine allgemeine Reaktionsgleichung für die Reformierung lautet:

$$C_nH_m + nH_2O \rightarrow nCO + \left(n + \frac{m}{2}\right)H_2$$

Der Formel ist zu entnehmen, dass das Gemisch aus Alkanen und Wasserdampf in ein kohlenstoffmonoxid- und wasserstoffhaltiges Synthesegas umgesetzt wird. Weitere mögliche Bestandteile des Erdgases, wie insbesondere Stickstoff, Sauerstoff und/oder Kohlenstoffdioxid können die Reformereinheit 30 ohne Reaktion passieren.

Des Weiteren weist die Brennstoffzellenvorrichtung einen Nachbrenner 42 auf, welcher Abgase der Brennstoffzelleneinheit 12 zusätzlich verbrennt. Dabei reagiert aus dem Anodenabgas der Brennstoffzelleneinheit 12 verbliebener Brennstoff, in der Regel Wasserstoff und Kohlenstoffmonoxid und ggf. verbleibende Alkane, mit Sauerstoff, welches sich im Kathodenabgas befindet. Aus dem Brenner 42 tritt ein heißes Verbrennungsabgas aus, welches beispielsweise zur Erwärmung von Brauchwasser und/oder Heizwasser in einem Gebäude verwendet werden kann.

Je nach Zusammensetzung des Erdgases wird für eine optimierte Reformierung eine unterschiedliche Wasserdampfmenge benötigt. Ebenso sind die Konzentrationen im Synthesegas abhängig von der Zusammensetzung des verwendeten Erdgases. So ist es von Vorteil die Qualität des verwendeten Brennstoffs, bzw. des verwendeten Erdgases, zu erfassen, wodurch eine effektive Regelung der Brennstoffzellenvorrichtung ermöglicht wird.

Entsprechend weist die Brennstoffzellenvorrichtung 10 eine Analyseeinheit 44 auf, welche dazu vorgesehen ist, in einem Betriebszustand eine Qualitätskenngröße des Erdgases zu erfassen. Wie im aufgeführten Stand der Technik erläutert, kann diese Qualitätskenngröße über eine Brennwertbestimmung oder eine aufwendigen Analyse aller Bestandteile des verwendeten Brennstoffs erfolgen, um eine möglichst genaue Regelung der Brennstoffzellenvorrichtung 10 zu ermöglichen.

Das vorliegende Verfahren zum Betreiben der Brennstoffzellenvorrichtung 10 hat demgegenüber nun den Vorteil, dass die Qualitätskenngröße lediglich aus einer teilweisen Analyse der Bestandteile des verwendeten Brennstoffs bestimmt wird, wodurch eine volle Analyse aller Bestandteile des verwendeten Brennstoffs, bzw. des verwendeten Erdgases, nicht mehr notwendig ist.

So werden die Reformereinheit 30 und die Brennstoffzelleneinheit 12 in Abhängigkeit der Qualitätskenngröße des verwendeten Brennstoffs, bzw. des verwendeten Erdgases, betrieben.

Die Qualitätskenngröße entspricht dabei einer Anzahl potentiell freisetzbarer Elektronen pro Molekül des verwendeten Brennstoffs, welche im Weiteren als Elektronenkonfiguration $K_{e-}$ bezeichnet wird.

Dabei wird angenommen, dass das Erdgas aus 4 elektrochemisch aktiven Hauptspezies besteht, hier aus den Alkanen Methan ($CH_4$), Ethan ($C_2H_6$), Propan($C_3H_8$), Butan ($C_4H_{10}$). Alternativ wäre es aber auch möglich eine andere Anzahl an Hauptspezies anzunehmen.

Beim Betrieb der vorliegenden Brennstoffzellenvorrichtung 10 werden zur Bestimmung der Elektronenkonfiguration lediglich die elektrochemisch aktiven Stoffe im Brennstoff herangezogen. Die Elektronenkonfiguration $K_{e-}$ kann dann im Rahmen der vorliegenden Erfindung, im Falle der Verwendung von Erdgas als Brennstoff, wie folgt beschrieben werden:

$$K_{e-} = 8\, x_{CH_4} + 14\, x_{C_2H_6} + 20\, x_{C_3H_8} + 26\, x_{C_4H_{10}}\, ,$$

wobei $x_{C_nH_{2n+2}}$ (mit n = 1,2,3,4, ... ) die Stoffmenge der elektrochemisch aktiven Alkane meint.

So wird erfindungsgemäß zur Bestimmung der Elektronenkonfiguration als Qualitätskenngröße, lediglich eine teilweise Analyse des Brennstoffes, bzw. des Erdgases durchgeführt, indem durch die Analyseeinheit 44 lediglich eine Analyse einer bestimmten Anzahl an Stoffmengen elektrochemisch aktiver Stoffe, die nicht der Gesamtanzahl der im Brennstoff befindlichen Stoffe entsprechen, durchgeführt wird. Entsprechend werden zur Bestimmung der Elektronenkonfiguration $K_{e-}$ nicht alle Bestandteile des verwendeten Brennstoffs erfasst, wodurch ein vereinfachter Betrieb der Brennstoffzellenvorrichtung 10 ermöglicht wird.

In den gezeigten Ausführungsbeispielen wird zur Erfassung der genannten Stoffmengen des Brennstoffs ein Gaschromatograph verwendet, der dazu vorgesehen ist den Brennstoff, bzw. das Erdgas, im Hinblick auf die genannten Stoffe zu analysieren. Die erfassten Werte, werden dann an eine Regeleinheit 46 weitergegeben, mittels welcher dann die Elektronenkonfiguration $K_{e-}$ als Qualitätskenngröße bestimmt wird. Alternativ wäre es aber auch möglich, dass die Elektronenkonfiguration $K_{e-}$ mittels der Analyseeinheit 44 bestimmt wird, woraufhin die Elektronenkonfiguration $K_{e-}$ als Wert an die Regeleinheit 46 weitergegeben wird.

Zur Regelung der Brennstoffzellenvorrichtung 10 werden der Regeleinheit 46 Sollwerte vorgegeben, wobei ein erster Sollwert einem Verhältnis $\Phi$ zwischen Sauerstoff und Kohlenstoff entspricht, ein zweiter Sollwert einem Brennstoffnutzungsgrad $U_{f,S}$ entspricht und ein dritter Sollwert einem elektrischen Stromwert $I$ entspricht. Der Stromwert $I$ entspricht dabei dem Strom, der durch die Brennstoffzelleneinheit 12 erzeugt wird und kann daher auch als Stromwert $I$ der Brennstoffzelleneinheit 12 verstanden werden. Durch die Vorgabe der genannten Sollwerte $\Phi$, $U_{f,S}$ und $I$, kann eine gezielte und damit auch effektive Regelung der Brennstoffzellenvorrichtung 10 stattfinden, wobei die Werte nicht messtechnisch erfasst werden müssen.

Auf Grundlage der bestimmten Elektronenkonfiguration $K_{e-}$ und der vorgegebenen Sollwerte $\Phi$, $U_{f,S}$ und $I$ werden mittels der Regeleinheit 46 schließlich die Volumenströme innerhalb der Brennstoffzellenvorrichtung geregelt.

In dem in Fig. 1 gezeigten Ausführungsbeispiel wird die Abgasrückführungsrate $r_A$ in Abhängigkeit der Qualitätskenngröße, bzw. der Elektronenkonfiguration $K_{e-}$, und des ersten, zweiten und dritten Sollwerts. Dabei entspricht die Abgasrückführungsrate $r_A$ dem prozentualen Anteil des Anodenabgases, welches mittels der Abgasrückführung 38 rückgeführt wird.

Zur Regelung des Durchflusses in der Abgasrückführung 38 wird die Abgasrückführungsrate $r_A$ in der Regeleinheit 46 durch folgende Formel bestimmt:

$$r_A = \left( U_{f,S} \left( \frac{K_{e-}}{2\, f(K_{e-},\Phi)} - 1 \right) + 1 \right)^{-1},$$

wobei $f(K_{e-}, \Phi)$ als Erdgaskoeffizient verstanden werden kann und eine Funktion darstellt, welche aus einer Regression aus empirisch gemessenen Erdgasdaten im Vorfeld bestimmt wurde und ausschließlich von der Elektronenkonfiguration $K_{e-}$ und dem Sauerstoff-zu-Kohlenstoff-Verhältnis $\Phi$ abhängt. So kann die Abgasrückführungsrate $r_A$ ausschließlich in Abhängigkeit der bestimmten Elektronenkonfiguration $K_{e-}$ und der vorgegebenen Sollwerte $\Phi$, $U_{f,S}$ und $I$ bestimmt werden, wodurch eine vereinfachte Regelung der Brennstoffzellenvorrichtung 10 ermöglicht wird.

Entsprechend wird der Verdichter 40 der Abgasrückführung 38 über seine Drehzahl so geregelt, dass sich die Abgasrückführungsrate $r_A$ einstellt. So kann darunter auch Verstanden werden, dass der Volumenstrom $\dot{V}_r$ in der Abgasrückführung 38 ausschließlich in Abhängigkeit der bestimmten Elektronenkonfiguration $K_{e-}$ und der vorgegebenen Sollwerte $\Phi$, $U_{f,S}$ und $I$ bestimmt und entsprechend eingestellt wird. Der funktionelle Zusammenhang des Volumenstroms $\dot{V}_r$ zu den genannten Größen $K_{e-}$, $\Phi$, $U_{f,S}$ und $I$ lässt sich dabei wie folgt beschreiben:

$$\dot{V}_r = f\left(U_{f,S}, \Phi, I, K_{e-}\right)$$

Alternativ können auch Volumenströme an anderen Stellen der Brennstoffzellenvorrichtung 10, vor allem an Stellen der anodenseitigen Strömungsführung der Brennstoffzellenvorrichtung 10, ausschließlich in Abhängigkeit der bestimmten Elektronenkonfiguration $K_{e-}$ und der vorgegebenen Sollwerte $\Phi$, $U_{f,S}$ und $I$ bestimmt und entsprechend eingestellt werden. Dabei liegt derselbe funktionelle Zusammenhang vor, wie für den Volumenstrom $\dot{V}_r$ in der Abgasrückführung 38.

Mögliche Stellen der Brennstoffzellenvorrichtung 10 an denen eine solche Regelung stattfinden kann wären beispielsweise folgende: stromaufwärts der Einmündung der Abgasrückführung 38; stromabwärts der Einmündung der Abgasrückführung 38 und stromaufwärts der Reformereinheit 30; stromabwärts der Reformereinheit 30 und stromaufwärts der Brennstoffzelleneinheit 12; stromabwärts der Brennstoffzelleneinheit 12 und stromaufwärts der Abzweigung der Abgasrückführung 38; stromabwärts der Abzweigung der Abgasrückführung 38 und stromaufwärts des Nachbrenners 42. Auch wäre es denkbar den Volumenstrom an mehreren dieser Stellen der Brennstoffzellenvorrichtung 10 gleichzeitig zu regeln.

In dem gezeigten Ausführungsbeispiel wird zusätzlich zur Regelung der Brennstoffzellenvorrichtung 10 neben dem Volumenstrom $\dot{V}_r$ auch der Erdgasvolumenstrom mit demselben funktionellen Zusammenhang geregelt.

Bei zusätzlicher Bestimmung der Dichte oder der molaren Masse $M_{NG}$ des verwendeten Brennstoffs, bzw. des Erdgases, lassen sich analog zu den Volumenströmen auch die Massenströme bestimmen und entsprechend einstellen. Dabei kann der Funktionale Zusammenhang beispielsweise zwischen einem Massendurchfluss $\dot{m}_r$ in der Abgasrückführung 38 und den genannten Größen $K_{e-}$, $\Phi$, $U_{f,S}$, $I$ und $M_{NG}$ wie folgt beschrieben werden:

$$\dot{m}_r = f\left(U_{f,S}, \Phi, I, K_{e-}, M_{NG}\right)$$

Analog zu den Volumenströmen können entsprechend auch die Massenströme an anderen Stellen der Brennstoffzellenvorrichtung 10, vor allem an Stellen der anodenseitigen Strömungsführung der Brennstoffzellenvorrichtung 10, ausschließlich in Abhängigkeit der bestimmten Elektronenkonfiguration $K_{e-}$, der bestimmten molaren Masse $M_{NG}$ und der vorgegebenen Sollwerte $\Phi$, $U_{f,S}$ und $I$ bestimmt und entsprechend eingestellt werden. Dabei liegt in analoger Weise derselbe funktionelle Zusammenhang vor, wie für den Massendurchfluss $\dot{m}_r$ in der Abgasrückführung 38.

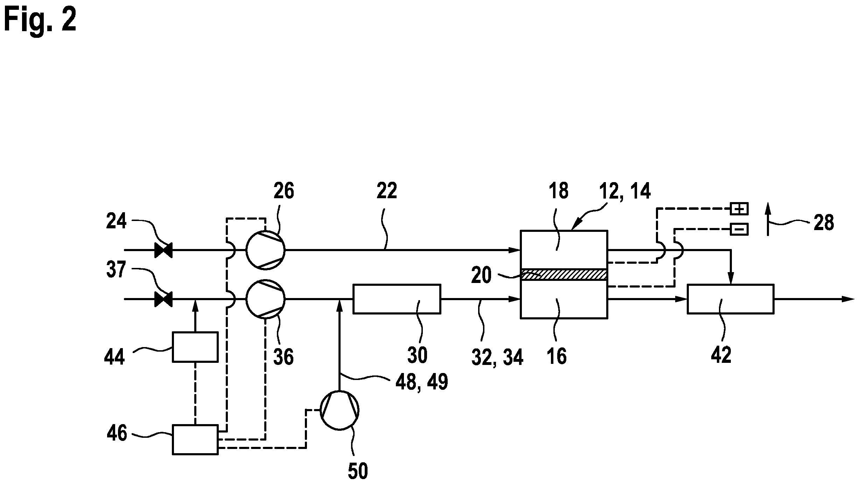

In Fig. 2 ist eine schematische Darstellung eines weiteren Ausführungsbeispiels einer Brennstoffzellenvorrichtung 10 gezeigt. Im Unterschied zu dem in Fig. 1 gezeigten Ausführungsbeispiel weist die Brennstoffzellenvorrichtung 10 in Fig. 2 anstelle einer Abgasrückführung 38 eine Wasserzuführung 48, bzw. eine Wasserzuführleitung 49, auf, wobei eine Wasserzuführungsrate $r_w$ in Abhängigkeit der Qualitätskenngröße $K_{e-}$, bzw. der Elektronenkonfiguration $K_{e-}$, und des ersten, zweiten und dritten Sollwerts $\Phi$, $U_{f,S}$ und $I$ geregelt wird. Auch hier findet eine Regelung ausschließlich in Abhängigkeit der genannten Größen statt, wodurch die Regelung der Brennstoffzellenvorrichtung 10 vereinfacht wird.

Entsprechend wird ein Verdichter 50, bzw. Pumpe, der Wasserzuführung 48 über seine Drehzahl so geregelt, dass sich die Wasserzuführungsrate $r_w$ einstellt. Entsprechend kann darunter auch Verstanden werden, dass der Volumenstrom $\dot{V}_w$ in der Wasserzuführung 48 ausschließlich in Abhängigkeit der bestimmten Elektronenkonfiguration $K_{e-}$ und der vorgegebenen Sollwerte $\Phi$, $U_{f,S}$ und $I$ bestimmt und entsprechend eingestellt wird. Die funktionellen Zusammenhänge der Volumenströme und Massenströme zu den genannten Größen $K_{e-}$, $\Phi$, $U_{f,S}$ und $I$ können in analoger weise für das Ausführungsbeispiel aus Fig. 2 beschrieben werden, wie sie bereits für das Ausführungsbeispiel aus Fig. 1 beschrieben wurden.

**Patentansprüche**

1. Verfahren zum Betreiben einer Brennstoffzellenvorrichtung (10), wobei die Brennstoffzellenvorrichtung (10) in Abhängigkeit einer Qualitätskenngröße eines verwendeten Brennstoffs betrieben wird, **dadurch gekennzeichnet, dass** die Qualitätskenngröße einer Anzahl potentiell freisetzbarer Elektronen pro Molekül des verwendeten Brennstoffs, insbesondere einer Elektronenkonfiguration ($K_{e-}$), entspricht, welche aus einer teilweisen Analyse der Bestandteile des verwendeten Brennstoffs bestimmt wird.

2. Verfahren nach Anspruch 1, **dadurch gekennzeichnet, dass** die Brennstoffzellenvorrichtung (10) zumindest eine Reformereinheit (30) und/oder zumindest eine Brennstoffzelleneinheit (12) aufweist, wobei die zumindest eine Reformereinheit (30) und/oder die zumindest eine Brennstoffzelleneinheit (12) in Abhängigkeit der Qualitätskenngröße des verwendeten Brennstoffs betrieben werden.

3. Verfahren nach einem der vorhergehenden Ansprüche, **dadurch gekennzeichnet, dass** zur Regelung der Brennstoffzellenvorrichtung (10) Sollwerte vorgegeben werden, wobei ein erster Sollwert einem Verhältnis ($\Phi$) zwischen Sauerstoff und Kohlenstoff entspricht, ein zweiter Sollwert einem Brennstoffnutzungsgrad ($U_{f,S}$) entspricht und/oder ein dritter Sollwert einem elektrischen Stromwert ($I$) entspricht.

4. Verfahren nach einem der vorhergehenden Ansprüche, **dadurch gekennzeichnet, dass** die Brennstoffzellenvorrichtung (10) eine Abgasrückführung (38) aufweist, wobei eine Abgasrückführungsrate ($r_A$) in Abhängigkeit der Qualitätskenngröße ($K_e$-) geregelt wird und insbesondere in Abhängigkeit des ersten, zweiten und/oder dritten Sollwerts ($\Phi$, $U_{f,S}$, $I$).

5. Verfahren nach einem der vorhergehenden Ansprüche, **dadurch gekennzeichnet, dass** die Brennstoffzellenvorrichtung (10) eine Wasserzuführung (48) aufweist, wobei eine Wasserzuführungsrate ($r_w$) in Abhängigkeit der Qualitätskenngröße ($K_e$_) geregelt wird, und insbesondere in Abhängigkeit des ersten, zweiten und/oder dritten Sollwerts ($\Phi$, $U_{f,S}$, $I$).

6. Brennstoffzellenvorrichtung (10), umfassend eine Regeleinheit (46) die dazu eingerichtet ist, die Brennstoffzellenvorrichtung (10) gemäss einem Verfahren nach einem der vorhergehenden Ansprüche zu betreiben.

## Claims

1. Method for operating a fuel cell device (10), wherein the fuel cell device (10) is operated in accordance with a quality characteristic of a fuel which is used, **characterized in that** the quality characteristic corresponds to a number of potentially releasable electrons per molecule of the fuel which is used, in particular to an electron configuration ($K_e$-) which is determined from a partial analysis of the constituents of the fuel which is used.

2. Method according to Claim 1, **characterized in that** the fuel cell device (10) has at least one reformer unit (30) and/or at least one fuel cell unit (12), wherein the at least one reformer unit (30) and/or the at least one fuel cell unit (12) are/is operated depending on the quality characteristic of the fuel which is used.

3. Method according to one of the preceding claims, **characterized in that**, in order to control the fuel cell device (10), set points are specified, wherein a first set point corresponds to a ratio ($\Phi$) between oxygen and carbon, a second set point corresponds to a fuel efficiency rating (Uf,s) and/or a third set point corresponds to an electrical current value (I).

4. Method according to one of the preceding claims, **characterized in that** the fuel cell device (10) has an exhaust gas return (38), wherein an exhaust gas return rate ($r_A$) is controlled in accordance with the quality characteristic ($K_e$-) and in particular in accordance with the first, second and/or third set point ($\Phi$, $U_{f,S}$, $I$).

5. Method according to one of the preceding claims, **characterized in that** the fuel cell device (10) has a water supply (48), wherein a water supply rate ($r_w$) is controlled in accordance with the quality characteristic ($K_e$-), and in particular in accordance with the first, second and/or third set point ($\Phi$, $U_{f,S}$, $I$) .

6. Fuel cell device (10) comprising a control unit (46) which is configured to operate the fuel cell device (10) by a method according to one of the preceding claims.

## Revendications

1. Procédé permettant de faire fonctionner un dispositif de pile à combustible (10), dans lequel le dispositif de pile à combustible (10) fonctionne en fonction d'une grandeur caractéristique de qualité d'un combustible utilisé, **caractérisé en ce que** la grandeur caractéristique de qualité correspond à un nombre d'électrons pouvant être libérés potentiellement pour chaque molécule du combustible utilisé, en particulier à une configuration d'électrons ($K_{e^-}$) qui est déterminée à partir d'une analyse partielle des constituants du combustible utilisé.

2. Procédé selon la revendication 1, **caractérisé en ce que** le dispositif de pile à combustible (10) présente au moins une unité de reformage (30) et/ou au moins une unité de pile à combustible (12), ladite au moins une unité de reformage (30) et/ou ladite au moins une unité de pile à combustible (12) fonctionnant en fonction de la grandeur caractéristique de qualité du combustible utilisé.

3. Procédé selon l'une quelconque des revendications précédentes, **caractérisé en ce que** pour réguler le dispositif de pile à combustible (10), des valeurs de consigne sont spécifiées, une première valeur de consigne correspondant à un rapport ($\Phi$) entre l'oxygène et le carbone, une deuxième valeur de consigne correspondant à un taux d'utilisation du combustible ($U_{f,s}$), et/ou une troisième valeur de consigne correspondant à une valeur de courant électrique (I).

4. Procédé selon l'une quelconque des revendications précédentes, **caractérisé en ce que** le dispositif de pile à combustible (10) présente un recyclage des gaz d'échappement (38), un taux de recyclage des gaz d'échappement ($r_A$) étant régulé en fonction de la grandeur caractéristique de qualité ($K_{e^-}$), et en particulier en fonction de la première, de la deuxième et/ou de la troisième valeur de consigne ($\Phi$, $U_{f,s}$, I).

5. Procédé selon l'une quelconque des revendications précédentes, **caractérisé en ce que** le dispositif de pile à combustible (10) présente une alimentation en eau (48), un taux d'alimentation en eau ($r_w$) étant régulé en fonction de la grandeur caractéristique de qualité ($K_{e^-}$), et en particulier en fonction de la première, de la deuxième et/ou de la troisième valeur de consigne ($\Phi$, $U_{f,s}$, I).

6. Dispositif de pile à combustible (10), comprenant une unité de régulation (46) qui est aménagée pour faire fonctionner le dispositif de pile à combustible (10) selon un procédé selon l'une quelconque des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013221618 A1
- WO 2012069693 A